# FASCICULE DE BREVET EUROPEEN

(11) **EP 4 103 423 B1**
(45) Date de publication et mention de la délivrance du brevet: **22.07.2026**
(21) Numéro de dépôt: 21702504.8
(22) Date de dépôt: 03.02.2021
(51) Int. Cl.: B60K 37/00, G05G 9/047, B60K 35/10, B60K 35/20, B60K 35/50, B60K 35/60, H01H 25/06

(54) **INTERFACE POUR LA COMMANDE D'AU MOINS UNE FONCTION D'UN ORGANE DE VÉHICULE AUTOMOBILE**
SCHNITTSTELLE ZUR STEUERUNG MINDESTENS EINER FUNKTION EINER EINHEIT EINES KRAFTFAHRZEUGS
INTERFACE FOR CONTROLLING AT LEAST ONE FUNCTION OF A UNIT OF A MOTOR VEHICLE

(30) Priorité: 11.02.2020 FR 2001343
(43) Date de publication de la demande: 21.12.2022
(73) Titulaire: DAV, 94046 Créteil Cedex (FR)
(72) Inventeur: CHIOCCHI, Jean Guillaume, 94000 Créteil (FR); REALAN, Eric, 94000 Créteil (FR); FABRE, Florian, 94000 Créteil (FR); BROUTY, Kevin, 94000 Créteil (FR)
(74) Mandataire: Delplanque, Arnaud
(86) Numéro de dépôt international: PCT/EP2021/052485
(87) Numéro de publication internationale: WO 2021/160483

(56) Documents cités:
- EP-A1- 0 516 870
- DE-A1- 102004 032 335
- DE-A1- 102007 039 338
- JP-B1- 6 641 452
- US-A1- 2020 176 203

## Description

Le domaine de la présente invention concerne les interfaces de commandes électriques pour véhicules automobiles, telles que les interfaces de commande permettant le positionnement des miroirs des rétroviseurs extérieurs d'un véhicule automobile.

Dans un véhicule automobile, en particulier dans le cas où un même véhicule est utilisé par plusieurs conducteurs à tour de rôle, il est nécessaire de régler la position d'un ou de plusieurs rétroviseurs extérieurs de manière adaptée pour que le conducteur puisse voir la route à l'arrière du véhicule. Des interfaces de commande de rétroviseur sont généralement utilisés pour régler à distance la position des miroirs des rétroviseurs extérieurs et/ou intérieurs au moyen de moteurs électriques. Des commutateurs électriques intégrés dans un système d'actionnement des miroirs d'un rétroviseur sont alors déplacés afin de fermer les circuits électromécaniques déclencheurs des moteurs électriques chargés de déplacer ces miroirs.

Les miroirs d'un rétroviseur sont généralement déplaçables suivant deux axes d'inclinaison, ces axes sont dans la plupart des cas perpendiculaires entre eux. Il peut notamment y avoir un premier axe haut/bas et un deuxième axe droite/gauche. Une même interface de commande peut être utilisée pour tous les réglages. Une telle interface de commande peut notamment comporter une touche de commande configurée pour être basculée dans chacune des directions de réglage.

Toutefois, dans le cas où la touche de commande peut être basculée dans une multitude de directions distinctes, la touche de commande peut accidentellement être pivotée suivant un axe ou une direction non désirée, telle qu'une direction diagonale qui ne correspond ni à l'axe haut/bas ni à l'axe droite/gauche. Un tel évènement peut par exemple déclencher une commande non désirée par un utilisateur de l'interface ou encore faire forcer les pièces de l'interface de commande de rétroviseur suivant un mode pour lesquelles elles ne sont pas configurées.

Les interfaces de commande connues dans l'état de la technique sont illustrées par les documents DE 102004032335 A et EP 0 516 870 A.

Un objet de la présente invention est de résoudre au moins partiellement un inconvénient de l'état de la technique.

À cet effet l'invention a pour objet une interface de commande pour la commande d'au moins une fonction d'un organe de véhicule automobile, l'interface de commande comportant une embase, une touche de commande basculante selon deux directions orthogonales, un cardan interposé entre la touche de commande et l'embase pour définir une première et une deuxième directions orthogonales de basculement, une tige de guidage portée par la face inférieure de la touche de commande disposée en vis-à-vis de l'embase et une matrice cruciforme de guidage alignée selon les deux directions orthogonales de basculement et portée par l'embase et disposée en vis-à-vis de la tige de guidage et coopérant avec l'extrémité libre de celle-ci de manière à empêcher un basculement de la touche de commande selon une direction autre que les deux directions orthogonales de basculement.

Grâce à la géométrie des pièces d'une telle interface de commande, un basculement de la touche de commande suivant une autre orientation que les deux directions de basculement orthogonales est bloqué et ne peut pas être exécuté. Le cardan permet de définir les deux seuls degrés de liberté de la touche de commande par rapport à l'embase, à savoir le pivotement suivant les deux axes de basculement orthogonaux. La matrice cruciforme sert à diriger la tige de guidage uniquement dans ces directions de basculement orthogonales lors d'un pivotement de la touche de commande et renforce ainsi le guidage de celle-ci. En combinant l'action du cardan avec les directions des branches de la croix de la matrice cruciforme, un utilisateur de l'interface est contraint à pivoter la touche de commande uniquement suivant les deux directions de basculement orthogonales, un pivotement en dehors de ces directions n'est pas réalisable ni accidentellement, ni intentionnellement.

L'invention peut en outre comprendre un ou plusieurs des aspects suivants pris seuls ou en combinaison :
- la touche de commande est reliée au cardan par l'intermédiaire d'une première liaison pivot pour assurer le pivotement de la touche de commande suivant la première direction de basculement ;
- l'embase est reliée au cardan par l'intermédiaire d'une deuxième liaison pivot pour assurer le pivotement de la touche de commande suivant la deuxième direction de basculement ;
- la première ou la deuxième liaison pivot est formée par au moins un tourillon et au moins un palier coopérant l'un avec l'autre, dont l'un est porté par le cardan et l'autre par la touche de commande ou l'embase ;
- la touche de commande comporte au moins un palier coopérant avec un tourillon porté par le cardan pour former la première liaison pivot ;
- le au moins un palier a une forme en ailette trouée ;
- l'embase comporte deux tourillons coopérant chacun respectivement avec un palier porté par le cardan pour former la deuxième liaison pivot ;
- le cardan présente un bord périphérique de forme générale carrée ainsi qu'une cloison centrale, le bord périphérique étant relié à la cloison centrale par des poutrelles de renfort ;
- la tige de guidage passe par le point d'intersection entre les axes des deux liaisons pivots ;
- la tige de guidage comporte au moins une nervure latérale de renfort ;
- l'extrémité libre de la tige de guidage a une forme carrée dans un plan de coupe transversale ;
- l'extrémité libre de la tige de guidage passe à travers la matrice cruciforme ;
- la matrice cruciforme vient de matière avec l'embase ;
- l'interface comporte un guide de lumière agencé en regard de la face inférieure de la touche de commande ;
- le guide de lumière comprend au moins une patte de clipsage configurée pour être logée dans une ouverture d'une paroi de maintien de l'embase afin de solidariser le guide de lumière et l'embase ;
- l'interface comprend quatre pistons ayant une extrémité en contact avec la face inférieure de la touche de commande ;
- les pistons sont déplaçables en translation rectiligne suivant la direction perpendiculaire au deux directions orthogonales de basculement ;
- les pistons sont configurés pour activer lors d'un basculement de la touche de commande des commutateurs électriques portés par l'interface ; et
- la touche de commande est issue d'un procédé de moulage par bi-injection.

D'autres avantages et caractéristiques de l'invention apparaîtront plus clairement à la lecture de la description suivante donnée à titre d'exemple illustratif et non limitatif, et des dessins annexés parmi lesquels :
[Fig. 1] La figure 1 représente une vue schématique en perspective d'un habitacle de véhicule automobile dans lequel est installée l'interface de commande électrique pour la commande d'au moins une fonction d'un organe de véhicule automobile ;
[Fig. 2] La figure 2 représente une vue schématique éclatée et en perspective d'un mode de réalisation de l'interface de commande de la Figure 1 ;
[Fig. 3] La figure 3 représente une vue de dessus d'un détail de l'embase de l'interface de commande de la Figure 2 ;
[Fig. 4] La figure 4 représente une représente une vue en perspective d'un détail de l'embase de la Figure 3 ;
[Fig. 5] La figure 5 représente une vue en perspective d'un premier mode de réalisation de la touche de commande assemblée au cardan de l'interface de commande de la Figure 2 ;
[Fig. 6] La figure 6 représente une vue en perspective du cardan de l'interface de commande de la Figure 2 ;
[Fig. 7] La figure 7 représente une vue en perspective de la face inférieure du premier mode de réalisation de la touche de commande de la Figure 5 ;
[Fig. 8] La figure 8 représente une vue en perspective d'un deuxième mode de réalisation de la touche de commande de l'interface de commande de la Figure 2 ;
[Fig. 9] La figure 9 représente une vue de dessus d'un assemblage comprenant l'embase, le cardan et le guide de lumière de l'interface de commande de la Figure 2 ;
[Fig. 10] La figure 10 représente une vue en perspective du guide de lumière de l'interface de commande de la Figure 2, et
[Fig. 11] La figure 1 représente une vue en coupe de l'interface de commande de la Figure 2.

Sur ces figures, les éléments identiques portent les mêmes numéros de référence.

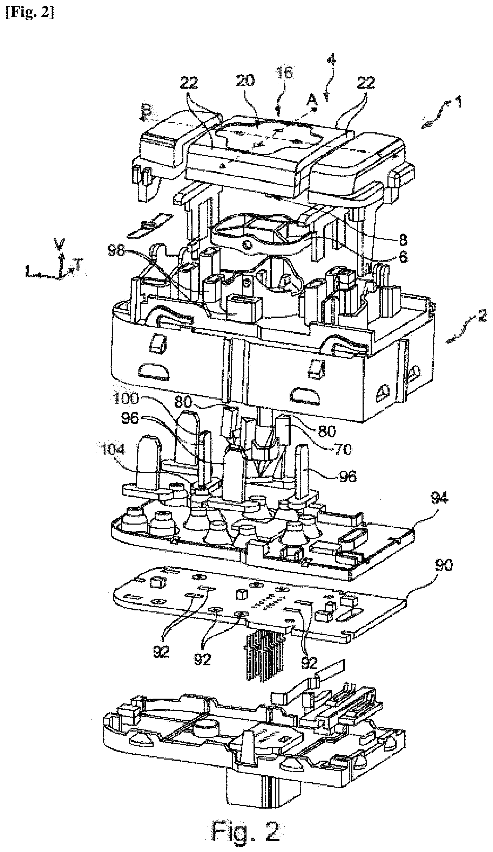

On désigne les directions longitudinale, verticale et transversale indiquées sur les figures 2 à 11 par le dièdre (L, V, T).

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la description, on peut indexer certains éléments, comme premier élément ou deuxième élément. Dans ce cas, il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps.

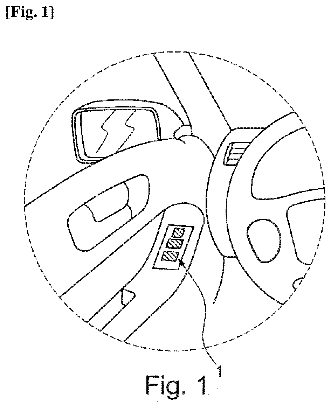

La Figure 1 montre une représentation schématique d'une interface 1 pour la commande d'au moins une fonction d'un organe de véhicule automobile, tel que les miroirs mobiles disposés dans les rétroviseurs extérieurs du véhicule automobile. A titre illustratif, l'interface 1 est agencée à la portée du conducteur ou du passager, par exemple dans une portière ou dans la console centrale de l'habitacle entre les sièges conducteur et passager ou dans le plafonnier de l'habitacle. L'interface 1 de commande peut bien sûr prendre n'importe quelle orientation dans l'espace. Elle peut par exemple être retournée de 180° par rapport à l'orientation indiquée sur les figures pour être intégrée dans le plafonnier.

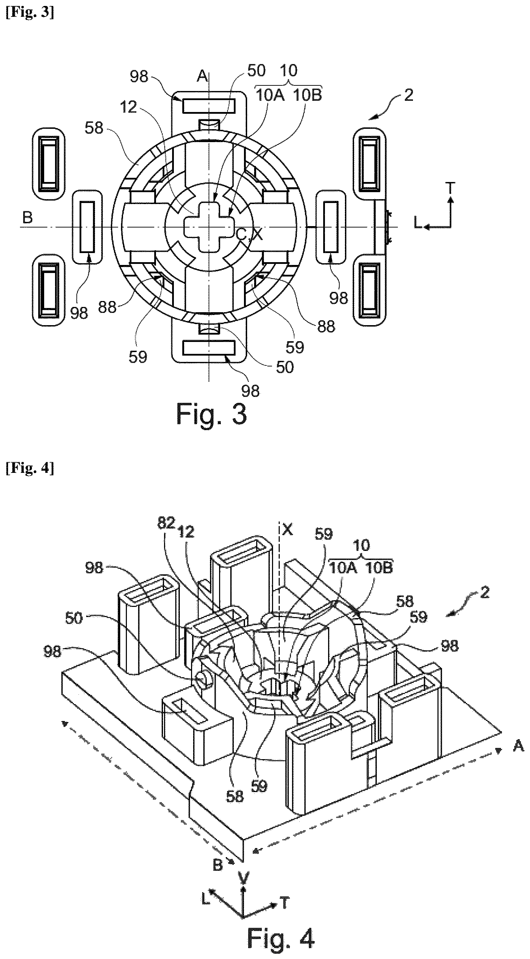

L'interface 1 de commande comporte une embase 2 (Figure 2), une touche de commande 4 basculante selon deux directions orthogonales A et B, un cardan 6 interposé entre la touche de commande 4 et l'embase 2, une tige de guidage 8 et une matrice cruciforme 10 de guidage alignée selon les deux directions orthogonales A et B de basculement (Figure 3 et 4) et portée par l'embase 2. Sur les Figures 2 à 11, les deux directions orthogonales A et B correspondent respectivement aux directions transversale T et longitudinale L.

La matrice cruciforme 10 vient par exemple de matière avec l'embase 2, comme illustrée sur les Figures 3 et 4. Autrement dit, la matrice cruciforme 10 est une partie intégrante de l'embase 2 et forme une structure monobloc avec cette embase 2. La matrice cruciforme 10 se présente notamment sous la forme d'un trou en forme de croix. La matrice cruciforme 10 est ainsi formée par deux fentes 10A et 10B dans une paroi de fond 12 de forme circulaire et solidaire de l'embase 2. La paroi de fond 12 s'étend dans un plan perpendiculaire à l'axe vertical V. La fente 10A s'étend suivant la première direction de basculement A, c'est-à-dire parallèlement à la direction transversale T, tandis que la fente 10B s'étend suivant la deuxième direction de basculement B, c'est-à-dire parallèlement à la direction longitudinale L. Les deux fentes 10A et 10B sont notamment sécantes en leur milieu, définissant ainsi le centre C de la matrice cruciforme 10 qui peut coïncider avec le centre de la paroi de fond 12. Les fentes 10A et 10B peuvent être de même longueur ou de longueurs différentes.

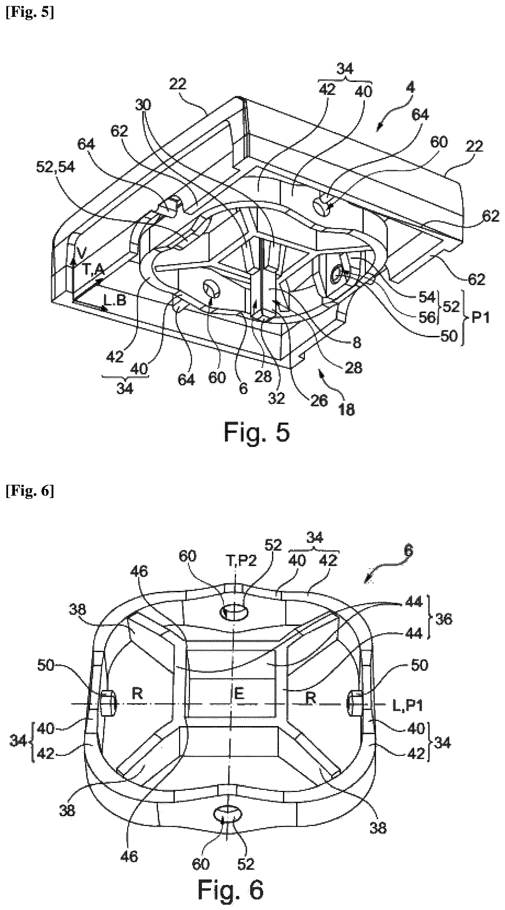

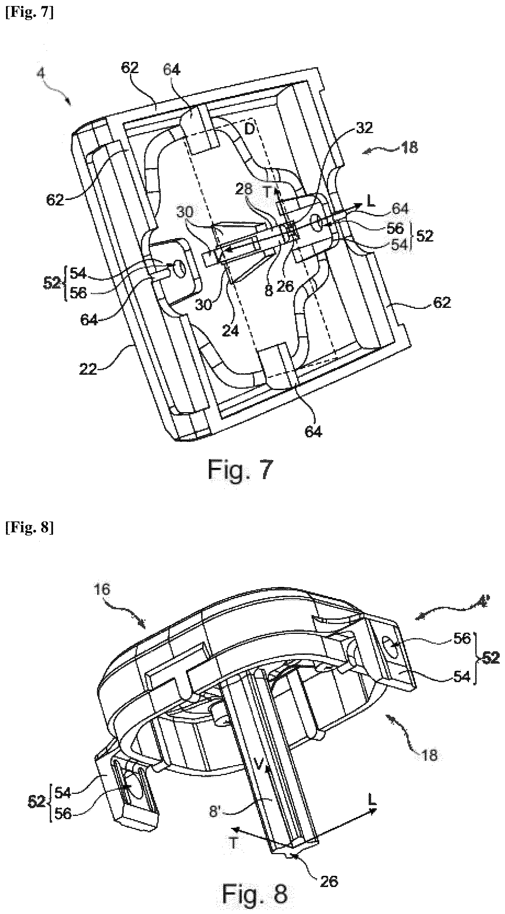

La matrice cruciforme 10 n'est pas visible pour un utilisateur de l'interface 1, car la touche de commande 4 est montée sur l'embase 2 de façon à recouvrir intégralement la matrice cruciforme 10 (Figure 2). La touche de commande 4 présente une face supérieure 16 visible pour un utilisateur de l'interface 1 et une face inférieure 18 (Figures 5 et 7) disposée en vis-à-vis de l'embase 2 et de la matrice cruciforme 10 de manière à ne pas être visible pour un utilisateur de l'interface 1.

Les faces supérieure 16 et inférieure 18 de la touche de commande 4 ont par exemple une forme générale carrée. Selon un mode de réalisation non illustré de la touche de commande 4, ses faces supérieure 16 et inférieure 18 peuvent être de forme ronde ou encore en forme de croix, les branches de la croix étant orientées dans les directions orthogonales A et B de basculement.

Selon un mode de réalisation de la touche de commande 4 illustré à la Figure 2, la face supérieure 16 peut comporter des marques en forme de flèches telles que « < », « > », « ▲ » et « ▼ » translucides permettant d'indiquer les directions orthogonales A et B dans lesquelles peut être basculée la touche de commande 4. Optionnellement, la face supérieure 16 peut présenter un relief 20, tel un enfoncement ou un motif protubérant configuré pour orienter le doigt d'un utilisateur vers les bords 22 de la touche de commande 4 de manière à lui indiquer par voie haptique les directions de basculement A et B.

La tige de guidage 8 est portée par la face inférieure 18 de la touche de commande 4, elle est disposée en vis-à-vis de l'embase 2. La tige de guidage 8 s'étend notamment dans la direction verticale V lorsque la touche de commande occupe une position de repos, c'est-à-dire en absence de toute interaction entre un utilisateur et l'interface 1 de commande.

Une extrémité 24 (Figure 7) de la tige de guidage 8 est par exemple solidaire de la face inférieure 18 de la touche de commande 4. La tige de guidage 8 présente également une extrémité libre 26. Selon un mode de réalisation de la touche de commande 4 illustré notamment sur les figures 5 et 7, l'extrémité libre 26 de la tige de guidage 8 a une forme carrée dans un plan de coupe transversale formé par l'axe longitudinal L et l'axe transversal T. L'extrémité libre 26 de la tige de guidage 8 est donc de forme parallélépipédique et présente quatre faces latérales 28 rectangulaires. En l'occurrence, l'intégralité de la tige de guidage 8 peut être de forme parallélépipédique et présenter quatre faces latérales 28 rectangulaires qui s'étendent tout au long de la tige de guidage 8.

Selon le mode de réalisation de la tige de guidage 8 illustré sur les figures 5 et 7, la tige de guidage 8 comporte au moins une nervure latérale de renfort 30 qui s'étend sur au moins une partie de la longueur totale de la tige de guidage 8. La tige de guidage 8 peut ainsi faire apparaître deux portions distinctes : une première portion proximale de la face inférieure 16, cette première portion étant renforcée par la au moins une nervure latérale de renfort 30 et une deuxième portion qui correspond à l'extrémité libre 26 de la tige de guidage 8, cette deuxième portion étant délimitée par les quatre faces latérales 28 rectangulaires et un embout 32 émoussé.

La tige de guidage 8 comprend plus particulièrement entre une et quatre nervures latérales de renfort 30 qui sont pentues dans le sens de leur longueur, ce qui leur confère une forme générale triangulaire. La base des nervures latérales de renfort 30 triangulaires est par exemple solidaire de la face inférieure 18 de la touche de commande 4. Dans le cas particulier où la tige de guidage 8 comporte quatre nervures latérales de renfort 30, c'est-à-dire une nervure latérale de renfort 30 par face latérale 28 rectangulaire de la tige de guidage 8, l'extrémité encastrée 24 de la tige de guidage 8 a la forme d'une croix dans un plan de coupe transversal formé par l'axe longitudinal L et l'axe transversal T au niveau de la face inférieure 18.

Selon un autre mode de réalisation de la touche de commande 4' illustrée notamment sur la Figure 8, la tige de guidage 8' peut avoir une forme en croix dans un plan de coupe transversal tangent à la face inférieure 18. Ce mode de réalisation permet notamment s'affranchir des nervures latérales de renfort 30.

Dans les deux modes de réalisations de la touche de commande 4 et 4' respectivement illustrés aux Figures 7 et 8, la touche de commande 4 ou 4' est issue d'un procédé de moulage par bi-injection, connu également sous le nom « 2K injection molding ». Ce procédé de moulage par injection permet de combiner deux matières plastiques différentes ou deux couleurs distinctes lors de la production d'un même produit final. Grâce au procédé de moulage par bi-injection, une touche de commande 4 ou 4'avec des couleurs ou des degrés de dureté différents est obtenue lors d'un seul processus de moulage par injection. Ce choix de procédé s'avère ainsi économique et efficace, car il permet de s'affranchir d'une éventuelle étape de montage.

La touche de commande 4 est montée mobile en pivotement par rapport à l'embase 2. Plus précisément, le cardan 6 interposé entre la touche de commande 4 et l'embase 2 (Figure 2) définit la première et une deuxième directions orthogonales A et B de basculement en complément de la matrice cruciforme 10.

Selon un mode de réalisation du cardan 6 illustré notamment sur la Figure 6, le cardan 6 présente un bord périphérique 34 de forme générale carrée ainsi qu'une cloison centrale 36, le bord périphérique 34 étant relié à la cloison centrale 36 par des poutrelles de renfort 38. Plus précisément, le bord périphérique 34 présente quatre segments droits 40 reliés entre eux par des congés arrondis 42. La cloison centrale 36 est également de forme carrée et présente quatre portions droites 44 reliées entre elles tel que leurs extrémités forment des coins 46 en angle droit. Quatre poutrelles de renfort 38 s'étendent depuis l'extérieur des coins 46 de la cloison centrale 36 jusqu'à la face intérieure des congés arrondis 42 du bord périphérique 34. Les poutrelles de renfort 38 s'étendent ainsi dans les directions diagonales des carrés formés par le bord périphérique 34 et la cloison centrale 36. Selon un mode de réalisation non illustré du cardan 6, le bord périphérique 34 et/ou la cloison centrale 36 est/sont de forme circulaire.

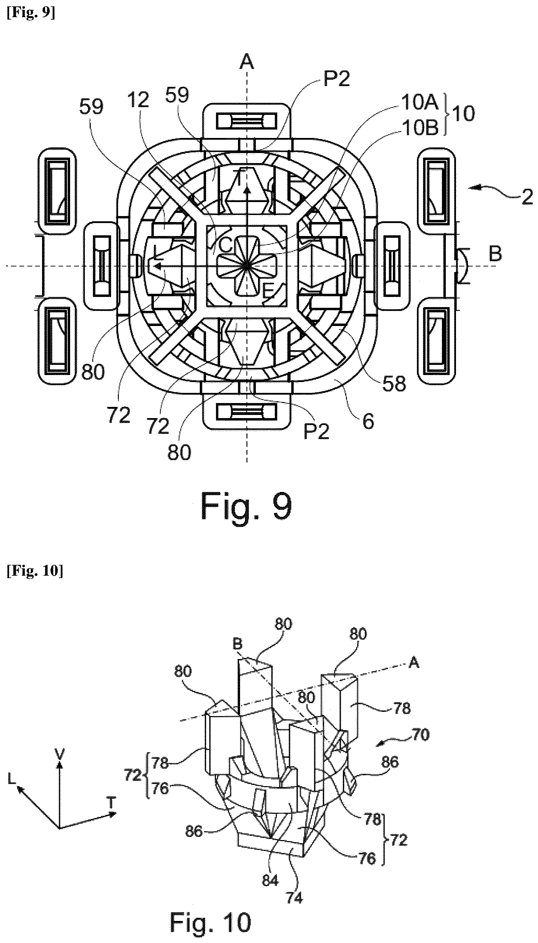

Le cardan 6 est lié d'une part à la touche de commande 4 (Figure 5) et d'autre part à l'embase 2 (Figure 9). Plus précisément, la touche de commande 4 est reliée au cardan 6 par l'intermédiaire d'une première liaison pivot P1 pour assurer le pivotement de la touche de commande 4 suivant la première direction de basculement A. De manière similaire, l'embase 2 est reliée au cardan 6 par l'intermédiaire d'une deuxième liaison pivot P2 pour assurer le pivotement de la touche de commande 4 suivant la deuxième direction de basculement B.

Sur la Figure 5, l'axe de la première liaison pivot P1 (représenté en ligne pointillée) entre la touche de commande 4 et le cardan 6 est parallèle à la direction longitudinale L, tandis que sur la Figure 9, l'axe de la deuxième liaison pivot P2 entre l'embase 2 et le cardan 6 est parallèle à la direction transversale T. Les axes de la première et de la deuxième liaisons pivot P1 et P2 sont orthogonaux entre eux et correspondent aux directions de basculement A et B.

De manière générale, la première ou la deuxième liaison pivot P1, P2 est formée par au moins un tourillon 50 et au moins un palier 52 coopérant l'un avec l'autre, dont l'un est porté par le cardan 6 et l'autre par la touche de commande 4 ou l'embase 2. Autrement dit, ces deux liaisons pivot P1 et P2 permettent de basculer la touche de commande 4 par rapport à l'embase 2 dans les directions de basculement A et B grâce à la coopération entre des tourillons 50 et des paliers 52, ces tourillons 50 et ces paliers 52 étant portés par le cardan 6, par la touche de commande 4 et par l'embase 2.

Ainsi, selon un mode de réalisation de l'interface 1 de commande illustré notamment à la Figure 5, la face inférieure 18 de la touche de commande 4 comporte au moins un palier 52 coopérant avec un tourillon 50 porté par le cardan 6 pour former la première liaison pivot P1. Le au moins un palier 52 a par ailleurs une forme en ailette trouée 54, c'est-à-dire que le palier 52 en forme d'ailette trouée 54 s'apparente par exemple à un pan rectangulaire de fine épaisseur portant un trou 56 traversant en son centre. La face inférieure 18 de la touche de commande 4 peut comporter deux paliers 52, c'est-à-dire deux ailettes trouées 54. Dans ce cas, les ailettes trouées 54 sont par exemple orientées en vis-à-vis l'une de l'autre, tel que les trous 56 sont alignés suivant un même axe parallèle à la direction longitudinale L, définissant ainsi l'axe de la première liaison pivot P1.

Par ailleurs, les ailettes trouées 54 sont notamment disposées chacune à proximité de deux bords 22 opposés de la touche de commande 4, comme illustré sur les Figures 5 et 7. Les ailettes trouées 54 peuvent être disposées de manière symétrique sur la face inférieure 18 de la touche de commande 4, elles sont par exemple disposées symétriquement de part et d'autre d'un plan transversal D formé par l'axe verticale V et l'axe transversal T (Figure 7).

Les deux ailettes trouées 54 portées par la face inférieure 18 de la touche de commande 4 forment ainsi des paliers 52 configurés pour accueillir chacun respectivement un tourillon 50 porté par le cardan 6. Ceci implique que le cardan 6 porte deux tourillons 50, comme illustré par exemple sur la Figure 6. Ces tourillons 50 sont par exemple des protubérances de forme cylindrique ou en forme de demi-sphère portées par le bord périphérique 34 du cardan 6.

Plus précisément, les deux tourillons 50 se situent chacun au milieu d'un segment droit 40 du bord périphérique 34 du cardan 6, ces segments droits 40 sont opposés l'un à l'autre, c'est-à-dire qu'ils ne sont pas reliés par un unique congé arrondi 42. Selon le mode de réalisation du cardan 6 illustré notamment sur la Figure 6, les tourillons 50 sont portés par les segments droits 40 qui sont orientés parallèlement à l'axe transversal T, tel que les axes de révolution R respectifs des tourillons 50 cylindriques se confondent avec l'axe longitudinal L. De plus, les deux tourillons 50 sont portés par la face intérieure du bord périphérique 34 du cardan 6, c'est-à-dire la face orientée vers la cloison centrale 36. Cependant, selon un mode de réalisation non illustré, les tourillons 50 peuvent être portés par la face extérieure du bord périphérique 34 du cardan 6.

De manière similaire, l'embase 2 comporte deux tourillons 50 (Figure 3) coopérant chacun respectivement avec un palier 52 porté par le cardan 6 (Figure 6) pour former la deuxième liaison pivot P2 (Figure 9). D'une part, selon le mode de réalisation de l'embase 2 illustré sur la Figure 4, les tourillons 50 de l'embase 2 s'apparentent à des protubérances cylindriques ou en forme de demi-sphère portées par une paroi de montage 58 de l'embase 2. La paroi de montage 58 est par exemple une enveloppe cylindrique qui partage avec la paroi de fond 12 un même axe de révolution X qui est parallèle à la direction verticale V et passe par le centre C de la matrice cruciforme 10 (Figure 3). La paroi de montage 58 et la paroi de fond 12 sont reliées entre elles par des parois de maintien 59. Il y a notamment quatre parois de maintien 59 disposées autour de l'axe de révolution X et inclinées par rapport à cet axe, de manière à former un entonnoir par intermittence, comme illustré par exemple sur la Figure 4. Les parois de maintien 59 s'étendent dans des directions diagonales de la matrice cruciforme 10. Les tourillons 50 sont notamment portés par la face extérieure de la paroi de montage 58.

D'autre part, le cardan 6 (Figure 6) présente deux paliers 52 sous la forme de deux orifices 60 cylindriques ajourant deux segments droits 40 du cardan 6 qui sont opposés l'un à l'autre. Ces segments droits 40 ne sont pas les mêmes que ceux portant les tourillons 50 de la première liaison pivot P1. Les orifices 60 ajourent les segments droits 40 qui sont orientés parallèlement à l'axe longitudinal L, de manière à être traversés en leurs centres respectifs par l'axe transversal T.

Les tourillons 50 et les orifices 60 portés par le cardan 6 se situent notamment au milieu des segments droits 40 qui les portent, tel que les axes de la première et de la deuxième liaison pivot P1, P2 se croisent au centre du cardan 6, formant un point d'intersection E, comme illustré sur la Figure 6.

Selon un mode de réalisation non illustré du cardan 6, celui-ci comporte uniquement des tourillons 50, ce sont alors l'embase 2 et la touche de commande 4 qui portent les paliers 52 configurés pour coopérer avec les tourillons 50 du cardan 6 pour former la première et la deuxième liaison pivot P1, P2.

Selon un autre mode de réalisation non illustré du cardan 6, celui-ci comporte uniquement des paliers 52, c'est-à-dire que chacun des quatre segments droit 40 comporte un orifice 60. Ce sont alors l'embase 2 et la touche de commande 4 qui portent les tourillons 50 configurés pour coopérer avec les paliers 52 du cardan 6 pour former la première et la deuxième liaison pivot P1, P2.

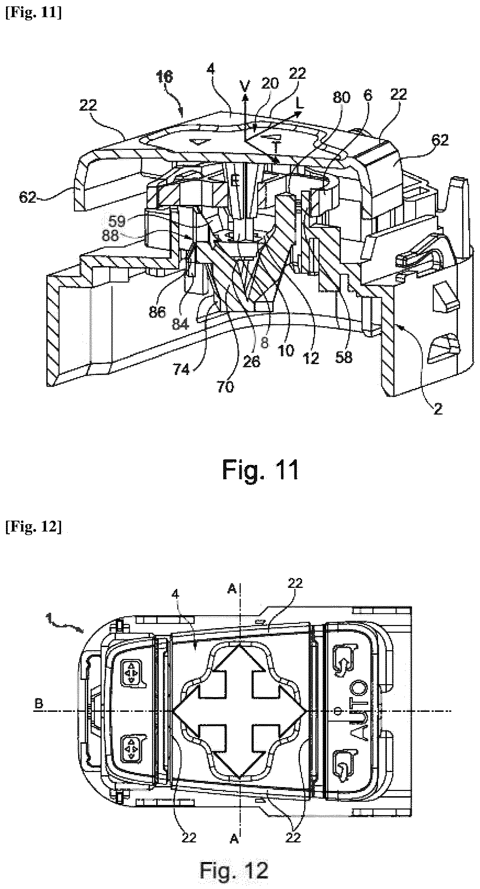

Indépendamment de la configuration choisie pour former la première et la deuxième liaison pivot P1, P2 à l'aide de tourillons 50 et de paliers 52, le cardan 6 est monté sur la paroi de montage 58 de l'embase 2 et recouvert par la touche de commande 4, comme illustré sur la Figure 11. Autrement dit, la surface supérieure 16 de la touche de commande 4 masque le cardan 6 et la paroi de montage 58 aux yeux d'un utilisateur de l'interface 1 de commande.

Avantageusement, la touche de commande 4 peut comporter des fronts latéraux 62 (Figure 5) délimitant les bords 22 de la face supérieure 16 et de la face inférieure 18 de la touche de commande 4. Ces fronts latéraux 62 sont par exemple disposés de telle manière qu'ils forment avec la face inférieure 18 une cavité destinée à accueillir le cardan 6 interposé entre la touche de commande 4 et l'embase 2, tel que la tige de guidage 8 passe par le point d'intersection E entre les axes des deux liaisons pivots P1 et P2, comme illustré sur la Figure 11.

Par ailleurs, la face inférieure 18 de la touche de commande 4 peut comporter quatre excroissances 64 (Figure 7) faisant saillie en direction de l'axe vertical V. Les excroissances 64 sont disposées plus particulièrement sur les axes des premières et deuxièmes liaisons pivot P1 et P2 et se situent notamment à proximité des bords 22 de la touche de commande 4. Elles viennent par exemple de matière avec les fronts latéraux 62 de la touche de commande 4. Les excroissances 64 situées sur les fronts latéraux 62 à proximité d'un palier 52 en forme d'ailette trouée 54 ont par exemple une étendue plus courte que les deux autres excroissances 64, comme illustré sur la Figure 7.

De plus, l'interface 1 de commande comporte un guide de lumière 70 agencé en regard de la face inférieure 18 de la touche de commande 4, comme illustré sur la Figure 11. Un guide de lumière 70 est une pièce translucide permettant de diriger des rayons lumineux depuis une même source lumineuse vers une ou plusieurs fenêtres distinctes. Un tel guide de lumière 70 s'avère particulièrement utile dans le cas d'un éclairage faible à l'intérieur de l'habitacle du véhicule automobile.

Selon un mode de réalisation du guide de lumière 70 illustré à la Figure 10, il comprend quatre branches coudées 72 solidaire d'un socle commun 74 de forme carrée. Les branches coudées 72 comportent chacune une portion proximale 76 du socle commun 74 et une portion droite 78. Les portions proximales 76 du socle commun 74 sont par exemple inclinées par rapport à la surface porteuse du socle commun 74 de manière à s'étendre chacune suivant l'une des directions de basculement A ou B. Les portions droites 78 s'étendent parallèlement à la direction verticale V.

Les extrémités de ces portions droites 78 forment des sommets libres 80. Autrement dit, les sommets libres 80 en forme de trapèze se situent en vis-à-vis de la face inférieure 18 de la touche de commande 4 et sont notamment situées en dessous des marques translucides en forme de flèches (« < », « > », « ▲ » et « ▼ ») de la face supérieure 16 de la touche de commande 4. Ceci est plus particulièrement visible sur la Figure 11. Les branches coudées 72 se situent dans des interstices formés par les parois de maintien 59, la paroi de montage 58 et la paroi de fond 12 de l'embase 2, comme illustré plus particulièrement sur la Figure 9.

Selon le mode de réalisation du guide de lumière 70 illustré à la Figure 10, celui-ci comprend une bague d'appui 84 cylindrique qui porte la jonction entre les portions proximales 76 du socle commun 74 et les portions droites 78 des branches coudées 72. Par ailleurs, le guide de lumière 70 comprend au moins une patte de clipsage 86 configurée pour être logée dans une ouverture 88 (Figure 11) de l'une des parois de maintien 59 de l'embase 2 afin de solidariser le guide de lumière 70 et l'embase 2. Le guide de lumière 70 comprend notamment quatre pattes de clipsage 86 en forme de protubérances triangulaires disposées à intervalle angulaire régulier sur la face extérieure de la bague d'appui 84. Les surfaces inférieures des pattes de clipsage 86 sont ainsi des surfaces d'appui qui maintiennent par leur contact avec les ouvertures 88 dans les parois de maintien 59 le guide de lumière 70 au sein de l'embase 2.

Selon le mode de réalisation de l'interface illustré sur la Figure 2, l'interface 1 de commande comprend par exemple une carte électronique 90 qui porte des commutateurs électriques 92. Les commutateurs électriques 92 sont par exemple des interrupteurs poussoirs. La carte électronique 90 est notamment recouverte par une membrane 94 élastique et déformable.

L'interface 1 de commande comprend par ailleurs quatre pistons 96 agencés entre la touche de commande 4 et la membrane 94. Les pistons 96 sont déplaçables en translation rectiligne suivant la direction perpendiculaire au deux directions orthogonales A et B de basculement, c'est-à-dire parallèlement à l'axe verticale V dans le cas de la Figure 2. Les pistons 96 sont partiellement agencés dans des guides rectilignes 98 de l'embase 2 qui sont configurés pour diriger les déplacements des pistons 96 suivant l'axe verticale V, en direction de la carte électronique 90 et inversement.

Un piston 96 a par exemple une forme en « T » et comporte une première extrémité 100 en contact avec l'une des excroissances 64 de la face inférieure 18 de la touche de commande 4. Un piston 96 comporte également une deuxième extrémité 102 plate en contact avec la membrane 94. La deuxième extrémité 102 plate est plus particulièrement agencée au-dessus d'un des commutateurs électriques 92. Les commutateurs électriques 92 peuvent être doublés, ils sont alors associés par paire sur la carte électronique 90. La forme plate de la deuxième extrémité 104 du piston 96 permet ainsi de couvrir simultanément les deux commutateurs électriques 92 situés côte à côte. Les pistons 96 sont configurés pour activer lors d'un basculement de la touche de commande 4 les commutateurs électriques 92 portés par l'interface 1 de commande.

Pour régler la position des miroirs au sein d'un rétroviseur extérieur, l'utilisateur appuie avec un doigt sur l'une des marques « < », « > », « ▲ » ou « ▼ » sur la face supérieure 16 ou sur l'un des bords 22 de la touche de commande 4. En conséquence, la touche de commande 4 bascule dans l'une des directions de basculement A ou B et l'extrémité libre 26 de la tige de guidage 8 est engagée dans l'une des deux fentes 10A ou 10B de la matrice cruciforme 10. L'extrémité libre 26 est configurée pour coopérer avec la matrice cruciforme 10 de guidage portée par l'embase 2 de manière à empêcher un basculement de la touche de commande 4 selon une direction autre que les deux directions orthogonales A et B de basculement. À cet effet, l'extrémité libre 26 de la tige de guidage 8 peut notamment passer au travers de la matrice cruciforme 10 (Figure 11), tel que lors d'un basculement de la touche de commande 4 par rapport à l'embase 2 suivant l'une des directions de basculement A ou B, l'extrémité libre 26 de la tige de guidage 8 demeure à l'intérieur de la matrice cruciforme 10.

Les faces latérales 28 rectangulaires de l'extrémité libre 26 de la tige de guidage 8 permettent une meilleure coopération par complémentarité de forme avec les fentes 10A et 10B délimitant la matrice cruciforme 10. En effet, en raison de la liaison plane formée entre les faces latérales 28 rectangulaires de l'extrémité libre 26 de la tige de guidage 8 et les faces intérieures des fentes 10A et 10B, le jeu entre ces pièces est plus précis que dans le cas où la tige de guidage 8 est de forme cylindrique, puisqu'une liaison glissière est ici plus avantageuse et pratique qu'une liaison linéaire rectiligne.

Lorsque la touche de commande 4 pivote dans une direction de basculement A ou B donnée, l'extrémité libre 26 de la tige de guidage 8 s'engage dans la fente 10A ou 10B s'étendant parallèlement à cette direction de basculement A ou B, mais dans le sens opposé.

Ainsi, dans le cas où l'utilisateur appuie sur la marque « > », la touche de commande 4 pivote dans la première direction de basculement A, dans le sens positif de la direction transversale T. Par ailleurs, l'extrémité libre 26 de la tige de guidage 8 s'engage dans la fente 10A s'étendant parallèlement à l'axe transversal T, mais suivant le sens négatif de cet axe.

Dans le cas où l'utilisateur appuie sur la marque « < », la touche de commande 4 pivote dans la première direction de basculement A, dans le sens négatif de la direction transversale T. Par ailleurs, l'extrémité libre 26 de la tige de guidage 8 s'engage dans la fente 10A s'étendant parallèlement à l'axe transversale T, mais suivant le sens positif de cet axe.

Dans ces deux premiers cas, la touche de commande 4 pivote autour du point E de la première liaison pivot P1 par rapport au cardan 6 qui reste alors fixe par rapport à l'embase 2.

Dans le cas où l'utilisateur appuie sur la marque « ▲ », la touche de commande 4 pivote dans la deuxième direction de basculement B, dans le sens positif de la direction longitudinale L. De plus l'extrémité libre 26 de la tige de guidage 8 s'engage dans la fente 10B s'étendant parallèlement à la direction longitudinale L, mais suivant le sens négatif de cet axe.

Dans le cas où l'utilisateur appuie sur la marque « ▼ », la touche de commande 4 pivote dans la deuxième direction de basculement B, dans le sens négatif de la direction longitudinale L. De plus l'extrémité libre 26 de la tige de guidage 8 s'engage dans la fente 10B s'étendant parallèlement à la direction longitudinale L, mais suivant le sens positif de cet axe.

Dans ces deux deuxièmes cas, l'ensemble formé par la touche de commande 4 et le cardan 6 pivote autour du point E de la deuxième liaison pivot P2 par rapport à l'embase 2.

Les quatre orientations de basculement possibles sont indiquées par des flèches sur la Figure 12.

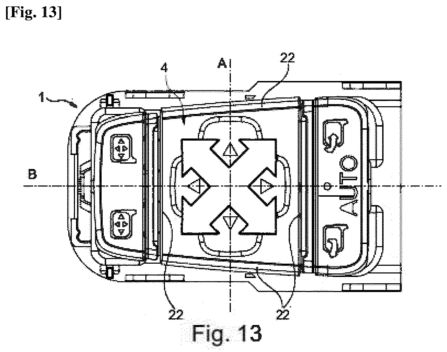

Dans le cas où l'utilisateur appuie sur une zone entre deux marques « < », « > », « ▲ » ou « ▼ », telle qu'un coin de la touche de commande 4, celle-ci n'est pas en mesure de pivoter suivant une direction diagonale représentée par les flèches sur la Figure 13, car la structure des liaisons pivot P1 et P2 entre le cardan 6, la touche de commande 4 et l'embase 2 n'autorise pas un tel sens de basculement. De plus, les fentes 10A et 10B de la matrice cruciforme 10 ne permettent pas à la tige de guidage 8 de s'engager suivant une direction diagonale. Autrement dit, la tige de guidage 8 s'oppose elle aussi à un pivotement de la touche de commande 4 suivant une direction autre que les deux directions de basculement A ou B.

Lorsque l'utilisateur appuie sur l'un des bords 22 de la touche de commande 4 pour faire pivoter celle-ci dans la direction de basculement A ou B choisie, l'excroissance 64 située en dessous de la marque indiquant la direction choisie appuie sur la première extrémité 100 du piston 96 avec lequel elle est en contact et pousse ainsi le piston 96 vers la carte électronique 90. La deuxième extrémité 102 du piston 96 déforme alors la membrane 94 recouvrant la carte électronique 90 qui porte les commutateurs électriques 92.

Ces commutateurs électriques 92 permettent plus particulièrement la fermeture des circuits électromécaniques déclencheurs de moteurs électriques chargés de déplacer des miroirs au sein des rétroviseurs extérieurs. Le déplacement d'un piston 96 en direction de la carte électronique 90 établit ainsi la connexion électrique entre des contacts de commutation (non représentés sur les figures) des commutateurs électriques 92.

Les contacts de commutation sont par exemple connectés à un contrôleur (non représenté sur les figures) qui commande un appareil, tel qu'un moteur électrique configuré pour ajuster la position d'un miroir d'un rétroviseur. En fonction du raccordement électrique, le moteur électrique commande le positionnement par rotation du miroir au sein du rétroviseur. Par exemple, si l'utilisateur appuie sur la marque « > », le miroir pivote dans le sens horaire, tandis que si l'utilisateur appuie sur la marque « < », le miroir pivote alors dans le sens antihoraire.

Ainsi l'interface 1 de commande permet de commander un organe de véhicule automobile tel que les miroirs des rétroviseurs extérieurs en manipulant une touche de commande 4 tout en empêchant un basculement de cette touche de commande 4 suivant une orientation autre que les deux directions de basculement orthogonales A et B dictées par la matrice cruciforme 10 et par les liaisons pivot P1 et P2 définies en grande partie par le cardan 6.

## Revendications

1. Interface (1) de commande pour la commande d'au moins une fonction d'un organe de véhicule automobile, l'interface (1) de commande, comportant :
- une embase (2) ;
- une touche de commande (4) basculante selon deux directions orthogonales (A, B);
l'interface comprenant :
- un cardan (6) interposé entre la touche de commande (4) et l'embase (2) pour définir une première et une deuxième directions orthogonales (A, B) de basculement;
- une tige de guidage (8) portée par la face inférieure (18) de la touche de commande (4) disposée en vis-à-vis de l'embase (2);
- une matrice cruciforme (10) de guidage alignée selon les deux directions orthogonales (A, B) de basculement , l'interface de commande étant **caractérisée en ce que** la matrice cruciforme (10) est portée par l'embase (2) et disposée en vis-à-vis de la tige de guidage (8) et coopérant avec l'extrémité libre (26) de celle-ci de manière à empêcher un basculement de la touche de commande (4) selon une direction autre que les deux directions orthogonales (A, B) de basculement.

2. Interface de commande selon la revendication précédente, **caractérisée en ce que** la touche de commande (4) est reliée au cardan (6) par l'intermédiaire d'une première liaison pivot (P1) pour assurer le pivotement de la touche de commande (4) suivant la première direction de basculement (A) et **en ce que** l'embase est reliée au cardan par l'intermédiaire d'une deuxième liaison pivot (P2) pour assurer le pivotement de la touche de commande (4) suivant la deuxième direction de basculement (B).

3. Interface de commande selon la revendication 2, **caractérisée en ce que** la première ou la deuxième liaison pivot (P1, P2) est formée par au moins un tourillon (50) et au moins un palier (52) coopérant l'un avec l'autre, dont l'un est porté par le cardan (6) et l'autre par la touche de commande (4) ou l'embase (2).

4. Interface de commande selon la revendication 3, **caractérisée en ce que** la touche de commande (4) comporte au moins un palier (52) coopérant avec un tourillon (50) porté par le cardan (6) pour former la première liaison pivot (P1) et **en ce que** le au moins un palier (52) a une forme en ailette trouée (54).

5. Interface de commande selon l'une quelconque des revendications 3 à 4, **caractérisée en ce que** l'embase (2) comporte deux tourillons (50) coopérant chacun respectivement avec un palier (52) porté par le cardan (6) pour former la deuxième liaison pivot (P2).

6. Interface de commande selon l'une quelconque des revendications précédentes, **caractérisée en ce que** le cardan (6) présente un bord périphérique (34) de forme générale carrée ainsi qu'une cloison centrale (36), le bord périphérique (34) étant relié à la cloison centrale (34) par des poutrelles de renfort (38).

7. Interface de commande selon l'une quelconque des revendications 2 à 6, **caractérisée en ce que** la tige de guidage (8) passe par le point d'intersection (E) entre les axes des deux liaisons pivots (P1, P2).

8. Interface de commande selon l'une quelconque des revendications précédentes, **caractérisée en ce que** la tige de guidage (8) comporte au moins une nervure latérale de renfort (30).

9. Interface de commande selon l'une quelconque des revendications précédentes, **caractérisée en ce que** l'extrémité libre (26) de la tige de guidage (8) a une forme carrée dans un plan de coupe transversale.

10. Interface de commande selon l'une quelconque des revendications précédentes, **caractérisée en ce que** l'extrémité libre (26) de la tige de guidage (8) passe à travers la matrice cruciforme (10).

11. Interface de commande selon l'une quelconque des revendications précédentes, **caractérisée en ce que** la matrice cruciforme (10) vient de matière avec l'embase (2).

12. Interface de commande selon l'une quelconque des revendications précédentes, **caractérisée en ce qu'**elle comporte un guide de lumière (70) agencé en regard de la face inférieure (18) de la touche de commande (4).

13. Interface de commande selon la revendication précédente, **caractérisée en ce que** le guide de lumière (70) comprend au moins une patte de clipsage (86) configurée pour être logée dans une ouverture (88) d'une paroi de maintien (59) de l'embase (2) afin de solidariser le guide de lumière (70) et l'embase (2).

14. Interface de commande selon l'une quelconque des revendications précédentes, **caractérisée en ce qu'**elle comprend quatre pistons (96) ayant une extrémité (100) en contact avec la face inférieure (18) de la touche de commande (4), les pistons (96) étant déplaçables en translation rectiligne suivant la direction perpendiculaire au deux directions orthogonales (A, B) de basculement et configurés pour activer lors d'un basculement de la touche de commande (4) des commutateurs électriques (92) portés par l'interface (1).

15. Interface de commande selon l'une quelconque des revendications précédentes, **caractérisée en ce que** la touche de commande (4) est issue d'un procédé de moulage par bi-injection.

## Patentansprüche

1. Bedienschnittstelle (1) zur Steuerung mindestens einer Funktion eines Kraftfahrzeugorgans, wobei die Bedienschnittstelle (1) umfasst:
- eine Grundplatte (2);
- eine Bedientaste (4), die in zwei orthogonalen Richtungen (A, B) kippbar ist;
- wobei die Schnittstelle umfasst:
- ein Kardangelenk (6), das zwischen der Bedientaste (4) und der Grundplatte (2) angeordnet ist, um eine erste und eine zweite orthogonale Kipprichtung (A, B) zu definieren;
- einen Führungsstift (8), der von der unteren Fläche (18) der Bedientaste (4) getragen wird und gegenüber der Grundplatte (2) angeordnet ist;
- eine kreuzförmige Führungsmatrix (10), die entlang der beiden orthogonalen Kipprichtungen (A, B) ausgerichtet ist, wobei die Bedienschnittstelle **dadurch gekennzeichnet ist, dass** die kreuzförmige Matrix (10) von der Grundplatte (2) getragen wird und gegenüber dem Führungsstift (8) angeordnet ist und mit dem freien Ende (26) desselben zusammenwirkt, um ein Kippen der Bedientaste (4) in eine andere Richtung als die beiden orthogonalen Kipprichtungen (A, B) zu verhindern.

2. Bedienschnittstelle nach dem vorhergehenden Anspruch, **dadurch gekennzeichnet, dass** die Bedientaste (4) mit dem Kardangelenk (6) über eine erste Schwenkverbindung (P1) verbunden ist, um die Schwenkung der Bedientaste (4) in der ersten Kipprichtung (A) zu gewährleisten, und dass die Grundplatte mit dem Kardangelenk über eine zweite Schwenkverbindung (P2) verbunden ist, um die Schwenkung der Bedientaste (4) in der zweiten Kipprichtung (B) zu gewährleisten.

3. Bedienschnittstelle nach Anspruch 2, **dadurch gekennzeichnet, dass** die erste oder die zweite Schwenkverbindung (P1, P2) durch mindestens einen Zapfen (50) und mindestens ein Lager (52) gebildet wird, die miteinander zusammenwirken, wobei eines vom Kardangelenk (6) und das andere von der Bedientaste (4) oder der Grundplatte (2) getragen wird.

4. Bedienschnittstelle nach Anspruch 3, **dadurch gekennzeichnet, dass** die Bedientaste (4) mindestens ein Lager (52) aufweist, das mit einem vom Kardangelenk (6) getragenen Zapfen (50) zusammenwirkt, um die erste Schwenkverbindung (P1) zu bilden, und dass das mindestens eine Lager (52) eine Form eines durchlöcherten Flügels (54) hat.

5. Bedienschnittstelle nach einem der Ansprüche 3 bis 4, **dadurch gekennzeichnet, dass** die Grundplatte (2) zwei Zapfen (50) aufweist, die jeweils mit einem vom Kardangelenk (6) getragenen Lager (52) zusammenwirken, um die zweite Schwenkverbindung (P2) zu bilden.

6. Bedienschnittstelle nach einem der vorhergehenden Ansprüche, **dadurch gekennzeichnet, dass** das Kardangelenk (6) einen Umfangsrand (34) mit allgemein quadratischer Form sowie eine zentrale Trennwand (36) aufweist, wobei der Umfangsrand (34) mit der zentralen Trennwand (36) durch Verstärkungsträger (38) verbunden ist.

7. Bedienschnittstelle nach einem der Ansprüche 2 bis 6, **dadurch gekennzeichnet, dass** der Führungsstift (8) durch den Schnittpunkt (E) zwischen den Achsen der beiden Schwenkverbindungen (P1, P2) verläuft.

8. Bedienschnittstelle nach einem der vorhergehenden Ansprüche, **dadurch gekennzeichnet, dass** der Führungsstift (8) mindestens eine seitliche Verstärkungsrippe (30) aufweist.

9. Bedienschnittstelle nach einem der vorhergehenden Ansprüche, **dadurch gekennzeichnet, dass** das freie Ende (26) des Führungsstifts (8) in einer Querschnittsebene eine quadratische Form hat.

10. Bedienschnittstelle nach einem der vorhergehenden Ansprüche, **dadurch gekennzeichnet, dass** das freie Ende (26) des Führungsstifts (8) durch die kreuzförmige Matrix (10) hindurchgeht.

11. Bedienschnittstelle nach einem der vorhergehenden Ansprüche, **dadurch gekennzeichnet, dass** die kreuzförmige Matrix (10) einstückig mit der Grundplatte (2) ausgebildet ist.

12. Bedienschnittstelle nach einem der vorhergehenden Ansprüche, **dadurch gekennzeichnet, dass** sie einen Lichtleiter (70) umfasst, der gegenüber der unteren Fläche (18) der Bedientaste (4) angeordnet ist.

13. Bedienschnittstelle nach dem vorhergehenden Anspruch, **dadurch gekennzeichnet, dass** der Lichtleiter (70) mindestens eine Cliplasche (86) umfasst, die konfiguriert ist, um in einer Öffnung (88) einer Haltewand (59) der Grundplatte (2) aufgenommen zu werden, um den Lichtleiter (70) und die Grundplatte (2) miteinander zu verbinden.

14. Bedienschnittstelle nach einem der vorhergehenden Ansprüche, **dadurch gekennzeichnet, dass** sie vier Kolben (96) umfasst, die ein Ende (100) in Kontakt mit der unteren Fläche (18) der Bedientaste (4) haben, wobei die Kolben (96) in geradliniger Translation in der Richtung senkrecht zu den beiden orthogonalen Kipprichtungen (A, B) verschiebbar sind und konfiguriert sind, um bei einem Kippen der Bedientaste (4) elektrische Schalter (92) zu aktivieren, die von der Schnittstelle (1) getragen werden.

15. Bedienschnittstelle nach einem der vorhergehenden Ansprüche, **dadurch gekennzeichnet, dass** die Bedientaste (4) aus einem Formverfahren durch Zweikomponenten-Spritzguss hervorgeht.

## Claims

1. Control interface (1) for controlling at least one function of a motor vehicle component, the control interface (1), comprising:
- a base (2);
- a control key (4) that pivots in two orthogonal directions (A, B);
- the interface comprising:
- a universal joint (6) interposed between the control key (4) and the base (2) to define first and second orthogonal directions (A, B) of pivoting;
- a guide rod (8) carried by the lower face (18) of the control key (4) arranged opposite the base (2);
- a cruciform matrix (10) for guiding aligned according to the two orthogonal directions (A, B) of pivoting, the control interface being **characterized in that** the cruciform matrix (10) is carried by the base (2) and arranged opposite the guide rod (8) and cooperating with the free end (26) thereof so as to prevent pivoting of the control key (4) in a direction other than the two orthogonal directions (A, B) of pivoting.

2. Control interface according to the preceding claim, **characterized in that** the control key (4) is connected to the universal joint (6) by means of a first pivot connection (P1) to ensure the pivoting of the control key (4) along the first direction of pivoting (A) and **in that** the base is connected to the universal joint by means of a second pivot connection (P2) to ensure the pivoting of the control key (4) along the second direction of pivoting (B).

3. Control interface according to claim 2, **characterized in that** the first or second pivot connection (P1, P2) is formed by at least one trunnion (50) and at least one bearing (52) cooperating with each other, one of which is carried by the universal joint (6) and the other by the control key (4) or the base (2).

4. Control interface according to claim 3, **characterized in that** the control key (4) comprises at least one bearing (52) cooperating with a trunnion (50) carried by the universal joint (6) to form the first pivot connection (P1) and **in that** the at least one bearing (52) has a shape of a perforated fin (54).

5. Control interface according to any one of claims 3 to 4, **characterized in that** the base (2) comprises two trunnions (50) each cooperating respectively with a bearing (52) carried by the universal joint (6) to form the second pivot connection (P2).

6. Control interface according to any one of the preceding claims, **characterized in that** the universal joint (6) has a peripheral edge (34) of generally square shape as well as a central partition (36), the peripheral edge (34) being connected to the central partition (36) by reinforcement beams (38).

7. Control interface according to any one of claims 2 to 6, **characterized in that** the guide rod (8) passes through the intersection point (E) between the axes of the two pivot connections (P1, P2).

8. Control interface according to any one of the preceding claims, **characterized in that** the guide rod (8) comprises at least one lateral reinforcement rib (30).

9. Control interface according to any one of the preceding claims, **characterized in that** the free end (26) of the guide rod (8) has a square shape in a transverse cross-sectional plane.

10. Control interface according to any one of the preceding claims, **characterized in that** the free end (26) of the guide rod (8) passes through the cruciform matrix (10).

11. Control interface according to any one of the preceding claims, **characterized in that** the cruciform matrix (10) is formed integrally with the base (2).

12. Control interface according to any one of the preceding claims, **characterized in that** it comprises a light guide (70) arranged facing the lower face (18) of the control key (4).

13. Control interface according to the preceding claim, **characterized in that** the light guide (70) comprises at least one clipping tab (86) configured to be housed in an opening (88) of a retaining wall (59) of the base (2) in order to secure the light guide (70) and the base (2) together.

14. Control interface according to any one of the preceding claims, **characterized in that** it comprises four pistons (96) having an end (100) in contact with the lower face (18) of the control key (4), the pistons (96) being movable in rectilinear translation in the direction perpendicular to the two orthogonal directions (A, B) of pivoting and configured to activate, during pivoting of the control key (4), electrical switches (92) carried by the interface (1).

15. Control interface according to any one of the preceding claims, **characterized in that** the control key (4) is produced by a bi-injection molding process.
